# NEW EUROPEAN PATENT SPECIFICATION

(11) **EP 1 753 175 B2**
(45) Date of publication and mention of the opposition decision: **14.01.2015**
(45) Mention of the grant of the patent: 11.02.2009
(21) Application number: 05757338.8
(22) Date of filing: 13.06.2005
(51) Int. Cl.: H04L 12/46, H04L 29/06, H04L 12/28

(54) **A METHOD FOR IMPLEMENTING VIRTUAL PRIVATE NETWORK**
VERFAHREN ZUR REALISIERUNG EINES VIRTUELLEN PRIVATEN NETZES
PROCEDE DE MISE EN PLACE D'UN RESEAU PRIVE VIRTUEL

(30) Priority: 11.06.2004 CN 200410048698
(43) Date of publication of application: 14.02.2007
(73) Proprietor: Huawei Technologies Co., Ltd., Longgang District, Shenzhen Guangdong 518129 (CN)
(72) Inventor: DONG, Weisi, 518129 Shenzhen Guangdong (CN)
(74) Representative: Thun, Clemens
(86) International application number: PCT/CN2005/000841
(87) International publication number: WO 2005/122490

(56) References cited:
- EP-A1- 1 392 033
- EP-A1- 1 392 033
- KR-A- 2004 001 206
- US-B1- 6 339 595

## Description

### Field of the invention

The present invention relates to a Virtual Private Network (VPN) technology, and more particularly, to a method for implementing a VPN based on the Multi-Protocol Label Switching (MPLS) protocol.

### Background of the invention

A VPN of the Border Gateway Protocol (BGP) / Multi-Protocol Label Switching (MPLS) was proposed in 1999 and has formed the Request for Comments (RFC) standard 2547.

A BGP/MPLS VPN model includes three parts: a Customer Edge (CE) device, a backbone network Provider Edge (PE) router, and a backbone network Provider (P) router. Wherein, the CE device is a component of a customer network and has an interface connecting to an operator network directly, which is usually a router and can not perceive the existence of the VPN; the PE router is an edge device of the operator network connecting to a CE of a customer directly, and in the MPLS network, all the processing related to the VPN are completed on the PE router; and the P router is located at the operator network as a backbone router, not connecting to the CE router directly, and needs to possess the basic MPLS signaling and forwarding capacities.

The division of the CE and PE is mainly made in terms of the management scopes of the operator and customers. CE and PE are the boundaries of the two management scopes. Routing information can be switched between the CE and the PE by using the External BGP (E-BGP), Interior Gateway Protocol (IGP), or static routes. It is not necessary for the CE to support the MPLS protocol or to be able to perceive the VPN. Inside the VPN, routing information is switched between the PEs based on the Multi-Protocol Border Gateway Protocol (MP-BGP).

The BGP/MPLS VPN defined by RFC 2547 is hereinafter described in detail.

### 1. A VPN Routing/Forwarding instance (VRF)

A BGP/MPLS VPN is composed of multiple customer sites. Multiple VRFs are saved in one PE. Each VRF corresponds to one customer site, and the content of a VRF mainly includes: an IP (Internet Protocol) route table, a label forwarding table, and a series of interface information and management information using the label forwarding table. Wherein, the interface information and management information includes: a Route Distinguisher (RD), a route filtering policy, a member interface list, etc. A VRF of a customer site in the VPN actually integrates the VPN member relationship and routing rules of the customer site. Message forwarding information is saved in the IP route table and the label forwarding table of each VRF. The system maintains an independent set of the routing table and label forwarding table for each VRF, thereby preventing data from leaking out of the VPN and keeping data outside of the VPN from entering.

### 2. A VPN-Internet Protocol version 4 (VPN-IPv4) address family

In a BGP/MPLS VPN, the BGP is used for distributing VPN routes among PE routers by adopting the new VPN- IPv4 address family. Wherein, a VPN- IPv4 address contains 12 bytes, beginning with an 8-byte RD and ending with a 4-byte IPv4 address. The operator can distribute an RD independently, however, they need to make their private Autonomous System (AS) number as one part of the RD to ensure the global uniqueness of each RD. The VPN- IPv4 address, the RD of which is zero, is synonymous with the globally unique IPv4 address. After such processing, even the 4-byte IPv4 address contained in the VPN-IPv4 address overlaps, the VPN-IPv4 address can still keep its global uniqueness. Besides, the route, which the PE router receives from the CE router, is an IPv4 route, so the route needs to be introduced to the VRF route table so that an RD can be attached to the route. In practical applications, all routes from the same customer site can be configured with an identical RD.

### 3. VPN-Target attributes

VPN-Target attributes ultimately determine the VPN division in the whole network. The MPLS/BGP VPN has no explicit VPN label, therefore, it mainly depends on the VPN-Target attribute to determine the routes of which site one site can receive and by which site the routes of the site can be received. There are two sets of VPN-Target attributes in the PE router: one set is for being attached to a route received from a site, called Export VPN-Targets while the other set is for determining which route can be introduced to the route table of the site, called Import VPN-Targets. By matching the Route Target attributes carried in the route, it is possible to obtain the member relationship of the VPN. Moreover, matching Route Target attributes may also be used for filtering the routing information received by the PE router, that is, when routing information enters the PE router, if there are identical items between the Export Route Targets set and the Import Route Targets set, the route will be accepted; and if there is no identical items between the Export Route Targets set and the Import Route Targets set, the route will be refused.

### 4. VPN message forwarding

In order to implement VPN message forwarding in the BGP/MPLS VPN, a method of 2-layer-label is applied in forwarding a VPN message. The first layer label, i.e., the outer layer label switched inside the backbone network, represents a Label Switched Path (LSP) from one PE to a PEER PE, and by using the first layer label, VPN messages can reach the PEER PE along the LSP corresponding to the first layer label. The second layer label, i.e., an inner label, used when a message is transmitted from the PEER PE to the CE, indicates which site the message should arrive at, or more particularly, which CE the message should arrive at, and according to the layer label, it is possible to find out the interface that is for forwarding the message to the customer. If both the source site and destination site of the VPN message connect to the same PE, the problem of how the message reaches the PEER PE will no longer exist, and the problem that should be solved is only how to arrive at the CE connecting to the destination site.

### 5. Distributing VPN routing information through the BGP

Routing information is transmitted between the CE and PE through the IGP or EBGP. The PE obtains the route table of the VPN and saves it in an independent VRF. Various PEs adopt the IGP to ensure the connectivity of the operator network, transfer VPN construction information and routes through the Internal BGP (IBGP), and complete updating their own VRFs respectively. And then, the PE updates the route table of a CE directly connecting to the PE by switching routes with the CE, thereby accomplishing the route switching among a variety of CEs.

As seen from the description above, in the prior art, two PE routers exchange routing information of the VPN by running the MBGP protocol and matches the Export Route Targets and Import Route Targets configured on each VRF to determine the route introduction of the VRF and which VRF, other than the VRF, the routes of the VRF should be distributed to. By this means, the corresponding VRFs can own the routes needed, which contains a label, so that a logical VPN relationship can be formed to guarantee a reachable route layer.

In a forwarding layer, the outer layer label can ensure that a message reaches the right PEER PE router, i.e., the router corresponding to the next-hop address of the VPN route. After the message arrives at the PEER PE router, it may be forwarded from the designated VPN interface according to the layer label carried in the message, or uploaded to the router directly. Wherein, the layer label is a part of the VPN route distributed through the MBGP. It should be noted that, it is also possible to adopt other tunnel techniques to ensure the message arriving at the right PEER PE router, for instance, the Generic Route Encapsulation (GRE) protocol tunnel and IP Security Protocol (IPsec) tunnel etc.

It can be seen that, there are several key factors in the prior art: the establishment of a tunnel between two PEs and the VPN routing information exchange between two PEs by the MBGP signaling. As for message forwarding, there are also two key factors: one is that the outer layer label guarantees the VPN message should arrive at the correct PE device, while the other one is that the inner label ensures that a message should be forwarded from the correct interface to the corresponding CE device. Only when both of the above factors are satisfied, the CEs connecting to two VRFs respectively can access to each other.

As the prior art described above is relatively complex, the requirement for management personnel will be higher in practical applications, so that flexible VPN configuration and adjustment can not be realized, especially for some requirements in special circumstances, for instances:
Firstly, if there are a few routes needed to be exchanged between two PE routers, but it is necessary to operate the complicate MBGP protocol in advance to exchange VPN routes according to the prior art, which makes the operation too complex and raises a fairly high requirement for the management personnel.
Secondly, if the VPN relationship required has not been established between one VRF and another VRF, i.e., the Import/Export targets do not match to each other, but it is needed for the VRF to access some CE routers connecting to another VRF, which can not be implemented by using the existing solution.
Thirdly, the prior art can not dynamically regulate the corresponding devices of the VRFs on other PEs which is accessible for a CE device according to the demands of the customers.

EP 1 392 033 A1 provides an expandable 3-layer PP VPN that consumes fewer resources and requires little configuration. It is to solve the problem that PE devices, in the BGP/MPLS VPN architecture, may be the bottleneck in large-scale deployments because they have to converge routes from a plurality of VPNs. And the objective is achieved by a hierachical PE (HoPE) which is formed by multiple PE devices.

### Summary

The present invention is to provide a method for implementing VPN in order to transmit VPN routes between two PE devices without running the MBGP protocol, and realize the inter-access of the VRFs on the two PE routers without the Route Target matching relationship.

The present invention discloses a method for implementing Virtual Private Networking (VPN), including:
configuring a static label for a VPN Routing Forwarding instance (VRF) corresponding to a Customer Edge CE connected with a first Provider Edge PE;
configuring in a second PE one or more static routes for reaching a network entity connected with the CE, the destination address of any of the one or more static routes is the address of the network entity connected with the CE, the next-hop address of any of the one or more static routes is the address of the first PE, and the static label configured for the VRF is taken as the label of any of the one or more static routes;
upon receiving a message to be forwarded, the second PE searching out a static route containing the destination address in the message, inserting the label of the searched out static route into the message as an inner layer label, and selecting a tunnel to forward the message to the first PE according to the next-hop address of the static route; and
on receiving the message, the first PE searching for the VRF, according to the inner layer label in the message, and forwarding the message to the network entity connected with the CE according to the searched out VRF.

The above solution may further include: transferring VPN routing information among the PEs via the multi-protocol extension border gateway protocol.

In the above solution, the VPN routing information may be the information contained in the one or more static routes configured in the second PE.

In the above solution, when searching out a static route containing the destination address in the message, may further include: if the static route is searched out, continuing the procedure; otherwise, terminating the procedure.

In the above solution, the tunnel may be an LSP, a Generic Routing Encapsulation tunnel, or an Internet Protocol Secure Tunnel.

A system for implementing Virtual Private Networking VPN includes:
a Customer Edge CE, connected with a first Provider Edge PE;
a network entity, connected with the CE;
the first PE, configured with a label for a VPN Routing Forwarding instance VRF corresponding to the CE; configured to search for the VRF according to an inner label in the message, and forward the message to the network entity connected with the CE according to the searched out VRF; and
a second PE, configured with one or more static routes for reaching a network entity connected with the CE, the destination address of any of the one or more static routes is the address of the network entity connected with the CE according to the searched out VRF; and
a second PE, configured with one or more static routes for reaching a network entity connected with the CE, the destination address on any of the one or more static routes is the address of the network entity connected with the CE, the next-hop address of any of the one or more static routes is the address of the first PE, and a label configured for the VRF is taken as the label of any of the one or more static routes; configured to searching out a static route containing the destination address in a message upon receiving the message, insert the label, and select a tunnel to forward the message to the first PE according to the next-hop address of the static route.

In the above solution, the address of the first PE may be the public address of the first PE.

In the above solution, the address of the network entity may be the network segment address of the network entity.

From the above description, it is clear that, differences between the embodiments of the present invention and the prior art are as follows: configuring a label for a VRF on a PE, and configuring one or more static routes in any other PE that needs to access the VRF, wherein, each configured static route includes a label of the destination VRF, and its next-hop address is a public address of the PE where the destination VRF is located; when a message matches the one or more static routes, inserting the label contained in the matched static route into the message as an inner label, finding a tunnel based on the next-hop address, and sending the message to the PE where the destination VRF is located; and the PE forwarding the received message to the VRF corresponding to the inner label. This method for implementing VPN by configuring labels and static routes can be applied independently or with the MBGP-based VPN implementation schemes.

With the simplified BGP/MPLS VPN scheme in accordance with the embodiments of the present invention, it is possible to choose not running the MBGP protocol according to the network size and the maintenance capability for the MPLS VPN, thereby simplifying the signaling protocol the MPLS VPN network and reducing the requirement to the maintenance personnel. Especially for the smaller size network, by using the embodiments of the present invention, it is relatively convenient to implement VPN.

Moreover, based on the deployed VPN relationship of the network, the VRFs of two PE routers that have no VPN matching relationship, i.e., their import/export Route Targets not matching to each other, may support inter-access, and the access relationship of the VRFs of the two PE routers can be adjusted conveniently and dynamically as required practically, which largely improves the flexibility of network configuration.

### Brief description of the drawings

Fig.1 is a schematic diagram of networking implemented by the simplified BGP/MPLS VPN in accordance with an embodiment of the present invention.
Fig.2 is a schematic flowchart in accordance with an embodiment of the present invention.

### Detailed description of preferred embodiments

The method of the embodiments of the present invention includes: configuring a static label for a VRF in a PE; when it is to run the MBGP protocol between two PEs, the static label being carried by a VPN route of the VRF when the VPN route is being advertised outwards; and if a message is being forwarded, the label can globally identify which VPN the message will be transmitted to.

In any PE that has the right to access a network entity corresponding to the VRF, except the PE configured with the static label, a static route arriving at the network entity is configured. The destination of the static route can be a default route or any network segment of a CE device connected with the PE configured with the static label, and the destination address of the static route is the address of the network entity at which it should arrive. The main difference between the static route mentioned above and a common static route in the prior art is that, the next-hop of the static route mentioned above is not the address of a P device of the PE but the public address of a destination side PE the customer desires to access; besides, the above-mentioned static route can be configured with a label, wherein, the label is the static label of the VRF on the destination side PE the customer desires to access. After the static route has been generated, the PE where the static route is configured can send a message to a tunnel needed to reach the next-hop PE through the configured next-hop address, and via the tunnel, the message may further reach the next-hop PE, i.e., the destination side PE. Wherein, the tunnel may be an LSP, a Generic Routing Encapsulation (GRE), an IPsec (IP Security), or any other tunnel.

This embodiment for implementing VPN by configuring labels and static routes can be realized independently or combined with an MBGP-based method for implementing VPN. That is to say, during the message forwarding, VPN can be implemented based on the matching relationship of the Export Route Targets and Import Route Targets, by using either the static routes configured or the VPN routes delivered via the MBGP. A preferred embodiment of the present invention is to adopt the MBGP to establish most of the VPNs, and using the method of static routes to configure the minority of the VPNs, with special requirements, such as a temporary VPN.

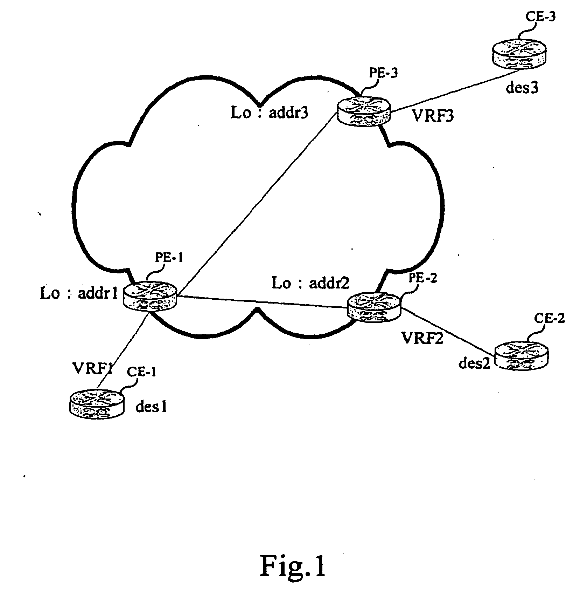

With reference to the schematic diagram of networking implemented by the simplified BGP/MPLS VPN in accordance with an embodiment of the present invention shown in Fig.1, suppose that the established VPN is to realize the inter-access between the network entity connected with CE-1 device and those connected with CE-3 device, as well as the inter-access between the network entity connecting with CE-1 device and those connecting with CE-2 device. The network entity mentioned is generally a user terminal device.

The public address of PE-1 is addr1, CE-1 connected with PE-1 corresponds to VRF1, and the network segment address of the network entity connected with CE-1 is dest1; the public address of PE-2 is addr2, CE-2 connected with PE-2 corresponds to VRF2, and the network segment address of the network entity connected with CE-2 is dest2; and the public address of PE-3 is addr3, CE-3 connected with PE-3 corresponds to VRF3, and the network segment address of the network entity connected with CE-3 is dest3.

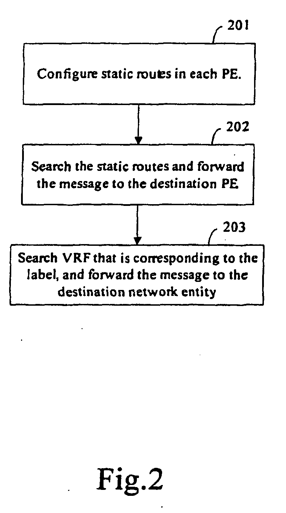

As shown in Fig.2, the process includes the following steps:
Step 201: configure one or more static routes in each PE.

In PE-3, configure a static label, L3, for VRF3 which corresponds to CE-3 device; and in PE-2, configure a static label, L2, for VRF2 which corresponds to CE-2 device.

Configure two static routes in PE-1: the destination address of one static route is the network segment address of the network entity connected with CE-2 device, dest2, the next-hop address is the public address of PE-2, addr2, and the label is the static label of VRF2, L2; and the destination address of the other static route is the network segment address of the network entity connected with CE-3 device, dest3, the next-hop address is the public address of PE-3, addr3, and the label is L3.

The above configuration will enable the network entity connected with CE-1 to access the network entities connected with CE-2 and CE-3.

Similarly, it is also possible to configure in PE-2 and PE-3 respectively, a static route reaching dest1, the network segment address of the network entity connected with CE-1 which connects PE-1, in order to implement the access of the network entity at CE-2 and CE-3 to the network entity at CE-1, no more details of which will be described hereinafter.

It is apparent that, such static route configuration does not need to run the MBGP protocol among PE-1, PE-2 and PE-3.

After then, message forwarding can be implemented.

According to the conventional protocol, PE-1 may be equipped with tunnels reaching addr2 and addr3, and similarly, both PE-2 and PE-3 may be equipped with tunnels reaching addr1.

Step 202: CE-1 forwards to PE-1 the message from the network entity which CE-1 connects.

After receiving the message, according to the destination network segment address carried in the message, supposed to be dest2, PE-1 searches the static routes that contains the address of dest2 in local, if no static route is found out, then it can be determined that the destination network entity is out of the scope of the VPN, and terminate the procedure; if a static route has been found out, insert the label of L2, configured for the static route, as an inner label into the message, and according to the next-hop address of addr2 contained in the static route, search a suitable tunnel to send the message to PE-2 that corresponds to addr2.

Step 203: after receiving the message, PE-2 extracts the inner label of L2 contained in the message. Since the inner label of L2 is also configured for VRF2 at PE-2, it is possible to find VRF2 whose static label is also L2 based on the label of L2, to find the forwarding table corresponding to VRF2 by means of the prior art to get the routing information of addr2, and to send the message to CE-2 correctly according to the routing information of addr2, and then CE-2 forwards the message to the destination network entity corresponding to dest2.

The static route configuration method in Step 201 is described in detail with an example hereinafter:
Suppose that there are three devices: PE1, P, and PE2, a VPN is configured at PE1, named vpn1, and a label is configured under the VPN, named 20; similarly, there is also a VPN existing at PE2, named vpn2, and a label configured under the VPN is 30. In order to enable the inter-access of these two VPNs, static routes can be configured as follows:
   The static route configured at PE2 is the next-hop of "ip route vpn vpn2 10.0.0.0/8" (the address at PE1): "PE1, label: 20"; and
   The static route configured at PE1 is the next-hop of "ip route vpn vpn1 20.0.0.0/8" (the address at PE2): "PE2, label: 30".

The forgoing described above is only the embodiments of the present invention, but not for limiting the protection scope of the present invention.

## Claims

1. A method for implementing Virtual Private Networking hereinafter abbreviated to VPN, **characterized by** comprising:
configuring a static label for a VPN Routing Forwarding instance, hereinafter abbreviated to VRF, (VRF2, VRF3) corresponding to a Customer Edge, hereinafter abbreviated to CE (CE-2, CE-3), connected with a first Provider Edge,
hereinafter abbreviated to PE (PE-2, PE-3) (201);
configuring in a second PE (PE-1) one or more static routes for reaching a network entity connected with the CE (CE-2, CE-3), the destination address of any of the one or more static routes is the address (dest2, dest3) of the network entity connected with the CE (CE-2, CE-3), the next-hop address of any of the one or more static routes is the address (addr2, addr3) of the first PE (PE-2, PE-3), and the static label configured for the VRF (VRF2, VRF3) is taken as the label for any of the one or more static routes(201); wherein, the second PE is a PE having the right to access the network entity connected with the CE;
upon receiving a message to be forwarded, the second PE (PE-1) searching out a static route containing the destination address in the message, inserting the label of the searched out static route into the message as an inner label, and selecting a tunnel to forward the message to the first PE (PE-2, PE-3) according to the next-hop address of the static route (202); and
on receiving the message, the first PE (PE-2, PE-3) searching for the VRF (VRF-2, VRF-3) according to the inner label in the message, and forwarding the message to the network entity connected with the CE (CE2, CE3) according to the searched out VRF (VRF2, VRF3) (203).

2. The method according to claim 1, **characterized by**, further comprising:
transferring VPN routing information among the PEs (PE-1, PE-2, PE-3) via a multi-protocol extension border gateway protocol.

3. The method according to claim 2, **characterized in that**, the VPN routing information is the information contained in the one or more static routes configured in the second PE (PE-1).

4. The method according to claim 1, **characterized in that**, when searching out a static route containing the destination address (dest2, dest3) in the message, said method further comprises: if the static route is searched out, continuing the procedure; otherwise, terminating the procedure.

5. The method according to claim 1, **characterized in that**, the tunnel is an LSP, a Generic Routing Encapsulation tunnel, or an Internet Protocol Secure Tunnel.

6. The method according to claim 1, **characterized in that**, the address of the first PE (PE-2, PE-3) is a public address of the first PE (PE-2, PE-3).

7. The method according to claim 1, **characterized in that**, the address (addr2, addr3) of the network entity is the network segment address of the network entity.

8. A system for implementing Virtual Private Networking hereinafter abbreviated to VPN, **characterized by** comprising:
a Customer Edge, hereinafter abbreviated to CE (CE-2, CE-3), connected with a first Provider Edge, hereinafter abbreviated to PE (PE-2, PE-3);
a network entity, connected with the CE (CE-2, CE-3);
the first PE (PE-2, PE-3), configured with a static label for a VPN Routing Forwarding instance, hereinafter abbreviated to VRF (VRF2, VRF3) corresponding to the CE(CE-2, CE-3); configured to search for the VRF (VRF-2, VRF-3) according to an inner label in a message on receiving the message, and forward the message to the network entity connected with the CE (CE2, CE3) according to the searched out VRF (VRF2, VRF3) (203); and
a second PE (PE-1), configured with one or more static routes for reaching a network entity connected with the CE (CE-2, CE-3), the destination address of any of the one or more static routes is the address (dest2, dest3) of the network entity connected with the CE (CE-2, CE-3), the next-hop address of any of the one or more static routes is the address (addr2, addr3) of the first PE (PE-2, PE-3), and the static label configured for the VRF (VRF2, VRF3) is taken as the label of any of the one or more static routes; wherein, the second PE is a PE having the right to access the network entity connected with the CE; configured to searching out a static route containing the destination address in a message upon receiving the message, insert the label in the searched out static route into the message as an inner label, and select a tunnel to forward the message to the first PE (PE-2, PE-3) according to the next-hop address of the static route.

## Patentansprüche

1. Verfahren zur Implementierung eines virtuellen privaten Netzes, nachfolgend abgekürzt als VPN, **dadurch gekennzeichnet, dass** es umfasst:
Konfigurieren eines statischen Labels für eine "VPN Routing Forwarding"-Instanz, nachfolgend abgekürzt als VRF (VRF2, VRF3), die einem "Customer Edge", nachfolgend abgekürzt als CE (CE-2, CE-3) entspricht, der mit einem ersten "Provider Edge", nachfolgend abgekürzt als PE (PE-2, PE-3) verbunden ist (201);
Konfigurieren von einer oder mehreren statischen Routen in einem zweiten PE (PE-1), um eine Netzwerkeinheit zu erreichen, die mit dem CE (CE-2, CE-3) verbunden ist, wobei die Zieladresse von jeder der einen oder mehreren statischen Routen die Adresse (dest2, dest3) der Netzwerkeinheit ist, die mit dem CE (CE-2, CE-3) verbunden ist, wobei die "Next-Hop"-Adresse von jeder der einen oder mehreren statischen Routen die Adresse (addr2, addr3) des ersten PE (PE-2, PE-3) ist, und das statische Label, das für die VRF (VRF2, VRF3) konfiguriert ist, als das Label für irgendeine der einen oder mehreren statischen Routen übernommen wird (201);
wobei das zweite PE ein PE mit dem Recht zum Zugang zu der Netzwerkeinheit, die mit dem CE verbunden ist, ist;
nach Empfang einer Nachricht, die weitergeleitet werden soll, Heraussuchen einer statischen Route, die die Zieladresse in der Nachricht enthält, durch das zweite PE (PE-1), Einfügen des Labels der ausgesuchten statischen Route in die Nachricht als ein inneres Label, und Auswählen eines Tunnels, um die Nachricht zu dem ersten PE (PE-2, PE-3) entsprechend der "Next-Hop"-Adresse der statischen Route weiterzuleiten (202); und
bei Empfang der Nachricht Suchen des ersten PE (PE-2, PE-3) nach der VRF (VRF-2, VRF-3) gemäß dem inneren Label in der Nachricht und Weiterleiten der Nachricht an die Netzwerkeinheit, die mit dem CE (CE2, CE3) verbunden ist, entsprechend der ausgesuchten VRF (VRF2, VRF3) (203).

2. Verfahren nach Anspruch 1,
**dadurch gekennzeichnet, dass** es ferner umfasst: Übertragen von VPN-Routing-Informationen unter den PEs (PE-1, PE-2, PE-3) über ein Multi-Protokoll-"Extension-Border-Gateway"-Protokoll.

3. Verfahren nach Anspruch 2,
**dadurch gekennzeichnet, dass**
die VPN-Routing-Information die Information ist, die in der einen oder den mehreren statischen Routen enthalten ist, die in dem zweiten PE (PE-1) konfiguriert sind.

4. Verfahren nach Anspruch 1,
**dadurch gekennzeichnet, dass**
wenn eine statische Route, die die Zieladresse (dest2, dest3) in der Nachricht enthält, ausgesucht wird, das Verfahren ferner umfasst: falls die statische Route ausgesucht ist, Weiterführen des Verfahrens, anderenfalls Beenden des Verfahrens.

5. Verfahren nach Anspruch 1,
**dadurch gekennzeichnet, dass**
der Tunnel ein LSP, ein "Generic Routing Encapsulation"-Tunnel oder ein "Internet Protocol Secure"-Tunnel ist.

6. Verfahren nach Anspruch 1,
**dadurch gekennzeichnet, dass**
die Adresse des ersten PE (PE-2, PE-3) eine öffentliche Adresse des ersten PE (PE-2, PE-3) ist.

7. Verfahren nach Anspruch 1,
**dadurch gekennzeichnet, dass**
die Adresse (addr2, addr3) der Netzwerkeinheit die Netzwerk-Segmentadresse der Netzwerkeinheit ist.

8. System zum Implementieren eines virtuellen privaten Netzes, nachfolgend abgekürzt als VPN,
**dadurch gekennzeichnet, dass** es umfasst:
ein "Customer Edge", nachfolgend abgekürzt als CE (CE-2, CE-3), das mit einem ersten "Provider Edge", nachfolgend abgekürzt als PE (PE-2, PE-3) verbunden ist;
eine Netzdateneinheit, die mit dem CE (CE-2, CE-3) verbunden ist;
das erste PE (PE-2, PE-3), das mit einem statischen Label für eine "VPN Routing Forwarding"-Instanz, nachfolgend abgekürzt als VRF (VRF2, VRF3), konfiguriert ist, die dem CE (CE-2, CE-3) entspricht; das konfiguriert ist, um nach der VRF (VRF-2, VRF-3) gemäß einem inneren Label in einer Nachricht bei Empfang der Nachricht zu suchen und die Nachricht an die Netzwerkeinheit weiterzuleiten, die mit dem CE (CE2, CE3), verbunden ist, gemäß der ausgesuchten VRF (VRF2, VRF3) (203); und
ein zweites PE (PE-1), das mit einer oder mehreren statischen Routen konfiguriert ist, um eine Netzwerkeinheit zu erreichen, die mit dem CE (CE-2, CE-3) verbunden ist, wobei die Zieladresse von jeder der einen oder mehreren statischen Routen die Adresse (dest2, dest3) der Netzwerkeinheit ist, die mit dem CE (CE-2, CE-3) verbunden ist, wobei die "Next-Hop"-Adresse von jeder der einen oder mehreren statischen Routen die Adresse (addr2, addr3) des ersten PE (PE-2, PE-3) ist, und wobei das statische Label, das für die VRF (VRF2, VRF3) konfiguriert ist, als das Label von jeder der einen oder mehreren statischen Routen übernommen wird; wobei das zweite PE ein PE mit dem Recht zum Zugang zu der Netzwerkeinheit, die mit dem CE Verbunden ist, ist; das konfiguriert ist, um eine statische Route, die die Zieladresse in einer Nachricht enthält, auszusuchen, nachdem die Nachricht empfangen wurde, das Label der ausgesuchten statischen Route in die Nachricht als ein inneres Label einzufügen und einen Tunnel auszuwählen, um die Nachricht an das erste PE (PE-2, PE-3) entsprechend der "Next-Hop"-Adresse der statischen Route weiterzuleiten.

## Revendications

1. Procédé de mise en oeuvre d'un réseau privé virtuel, abrégé ci-après en VPN, **caractérisé en ce qu'**il comprend :
la configuration d'une étiquette statique pour une instance de routage de renvoi VPN, abrégé ci-après en VRF, (VRF2, VRF3) correspondant à un terminal client, abrégé ci-après en CE (CE-2, CE-3), connecté à un premier terminal fournisseur, abrégé ci-après en PE (PE-2, PE-3) (201) ;
la configuration dans un deuxième PE (PE-1) d'une ou de plusieurs routes statiques pour atteindre une entité de réseau connectée au CE (CE-2, CE-3), l'adresse de destination d'une quelconque parmi l'une ou les plusieurs routes statiques est l'adresse (dest2, dest3) de l'entité de réseau connectée au CE (CE-2, CE-3), l'adresse de bond suivant d'une quelconque parmi l'une ou les plusieurs routes statiques est l'adresse (addr2, addr3) du premier PE (PE-2, PE-3), et l'étiquette statique configurée pour le VRF (VRF2, VRF3) est prise comme étiquette pour l'une quelconque l'une ou les plusieurs routes statiques (201) ; le deuxième PE étant un PE ayant le droit d'accès à l'entité de réseau connectée au CE ;
lors de la réception d'un message à renvoyer, le deuxième PE (PE-1) sélectionnant une route statique contenant l'adresse de destination dans le message, insérant l'étiquette de la route statique sélectionnée dans le message comme étiquette interne et sélectionnant un tunnel pour renvoyer le message au premier PE (PE-2, PE-3) en accord avec l'adresse de bond suivant de la route statique (202) ; et
lors de la réception du message, le premier PE (PE-2, PE-3) cherchant le VRF (VRF-2, VRF-3) en accord avec l'étiquette interne dans le message, et renvoyant le message à l'entité de réseau connectée au CE (CE-2, CE-3) en accord avec la VRF (VRF2, VRF3) (203) sélectionnée.

2. Procédé selon la revendication 1, **caractérisé en ce qu'**il, comprend en outre :
le transfert d'une information de routage VPN parmi les PEs (PE-1, PE-2, PE-3) par un protocole de passerelle de limite d'extension multiprotocole.

3. Procédé selon la revendication 2, **caractérisé en ce que**, l'information de routage VPN est l'information se trouvant dans l'une ou les plusieurs routes statiques configurées dans le deuxième PE (PE-1).

4. Procédé selon la revendication 1, **caractérisé en ce que**, lors d'une recherche d'une route statique contenant l'adresse de destination (dest2, dest3) dans le message, ledit procédé comprend en outre : si la route statique est sélectionnée, continuer la procédure ; sinon terminer la procédure.

5. Procédé selon la revendication 1, **caractérisé en ce que**, le tunnel est un LSP, un tunnel d'Encapsulation de Routage Générique ou un Tunnel Sécurisé de Protocole Internet.

6. Procédé selon la revendication 1, **caractérisé en ce que**, l'adresse du premier PE (PE-2, PE-3) est une adresse publique du premier PE (PE-2, PE-3).

7. Procédé selon la revendication 1, **caractérisé en ce que**, l'adresse (addr2, addr3) de l'entité de réseau est une adresse de segment de réseau de l'entité de réseau.

8. Système pour la mise en oeuvre d'un réseau privé virtuel, abrégé ci-après en VPN, **caractérisé en ce qu'**il comprend :
un terminal client, abrégé ci-après en CE (CE-2, CE-3), connecté à un premier terminal fournisseur abrégé, ci-après en PE (PE-2, PE-3) ;
une entité de réseau, connectée au CE (CE-2, CE-3) ;
le premier PE(PE-2, PE-3) configuré avec une étiquette statique pour une instance de routage de renvoi VPN, abrégé ci-après en VRF (VRF2, VRF3) correspondant au CE (CE-2, CE-3) ; configuré pour chercher le VRF (VRF-2, VRF-3) en accord avec une étiquette interne dans un message lors de la réception du message, et pour renvoyer le message à l'entité de réseau connectée au CE (CE2, CE3) en accord avec le VRF sélectionné (VRF2, VRF3) (203) ; et
un deuxième PE (PE-1), configuré avec une ou plusieurs routes statiques pour atteindre une entité de réseau connectée au CE (CE-2, CE-3), l'adresse de destination d'une quelconque parmi l'une ou les plusieurs routes statiques est l'adresse (dest2, dest3) de l'entité de réseau connectée au CE (CE-2, CE-3), l'adresse de bond suivant d'une quelconque parmi l'une ou les plusieurs routes statiques est l'adresse (addr2, addr3) du premier PE (PE-2, PE-3), et l'étiquette statique configurée pour le VRF (VRF2, VRF3) est prise comme étiquette d'une quelconque parmi l'une ou les plusieurs routes statiques ; le deuxième PE étant un PE ayant le droit d'accès à l'entité de réseau connectée au CE ; et configuré pour sélectionner une route statique contenant l'adresse de destination dans un message lors de la réception du message, insérer l'étiquette dans la route statique sélectionnée dans le message comme étiquette interne et sélectionner un tunnel pour renvoyer le message au premier PE (PE-2, PE-3) en accord avec l'adresse de bond suivant de la route statique.
